# EUROPEAN PATENT SPECIFICATION

(11) **EP 0 737 397 B1**
(45) Date of publication and mention of the grant of the patent: **09.04.2003**
(21) Application number: 95905267.1
(22) Date of filing: 19.12.1994
(51) Int. Cl.: H04M 3/42

(54) **METHOD AND ARRANGEMENT FOR DETERMINING THE RISK OF INTERFERENCE BETWEEN TWO OR MORE SERVICES IN ONE OR MORE TELECOMMUNICATION NETWORKS**
VERFAHREN UND ANORDNUNG ZUR BESTIMMUNG DES INTERFERENZRISIKOS ZWISCHEN ZWEI ODER MEHREREN DIENSTEN IN EINEM ODER MEHREREN TELEKOMMUNIKATIONSNETZWERKEN
PROCEDE ET CONFIGURATION PERMETTANT DE DETERMINER LE RISQUE D'INTERFERENCE ENTRE DEUX OU PLUSIEURS SERVICES DANS UN OU PLUSIEURS RESEAUX DE TELECOMMUNICATIONS

(30) Priority: 29.12.1993 SE 9304314
(43) Date of publication of application: 16.10.1996
(73) Proprietor: TELIA AB, 123 86 Farsta (SE); Thörner, Jan, 194 52 Upplands Väsby (SE)
(72) Inventor: THÖRNER, Jan, S-194 52 Upplands Väsby (SE)
(74) Representative: Hopfgarten, Nils
(86) International application number: SE9401224
(87) International publication number: WO95018503

(56) References cited:
- US-A- 4 747 127

## Description

### TECHNICAL FIELD

The present invention relates to value-added services in telecommunication networks. The services are used by subscribers in the telecommunication network on different occasions. Respective services are utilized partly in the own telecommunication network and partly in communication between different telecommunication networks.

### STATE OF THE ART

On the introduction of new services or modification of existing services in a telecommunication network, it needs to be checked whether respective services alone or in combination with other services will or will not produce interference in the telecommunication network. The risk of interference between different services in the telecommunication network has hitherto been checked manually. In this method, one was forced to assess, with the aid of experience, whether different combinations of services can occur, on the one hand and, on the other hand, can interfere with one another or not. At the same rate as the number of services increases in connection with the introduction of intelligent networks (IN), the evaluation of the effect of the services on the network has also been complicated. Other problems arise when subscribers communicate with one another over two or more telecommunication networks. In this connection, services in respective networks can have a negative effect on one or more of the networks. Major problems exist in determining which services there are in different networks and if these can cause interference in the networks.

The introduction of new services in telecommunication networks has been done traditionally with the aid of experts. In US Patent 4 747 127, the customer is given the capability of modifying the services. In this arrangement, the customers can add new features to the services which can partly involve new functions being added to the system or existing functions being modified without any interference with a current function in the system. The computer programme with controls the system is written in a "non-procedural language" which brings about direct control of interactions between services and provision of automatic execution of required functions during the state transitions.

In the assessment of the risk of interference if two or more services cause interference in one or more networks, the number of services has hitherto been low but it has still been difficult to check the risk of interference between the different services. Together with the increase in the number of services, the problem of determining whether different services affect one another negatively or not also increases at least with the square? of the number of services so that the possibility of manual control is excluded. In the hitherto manual investigation of the effect of different services on the network one has also been forced to do away with complete tests as the number of services increases. In stage 1 attempts to assess what services can occur in combination with one another. As a result, complete testing of pairs of services is possible but it is much more difficult to determine whether combinations of three four or more services in combination can occur or not.

In intelligent networks, the possibility of customizing services is given so that the number of service variants can become very large. Patent Specification US 4 747 127 also discloses, that the subscriber himself can affect functions and design of the services. The latter entails that the network operator no longer has a grip on what services are present in a network or their different designs.

To solve to a certain extent the problem with interference when different services are utilized in combination with one another, prioritization of certain services with respect to other services has been introduced in the network. This prioritization, however, is only introduced when known combinations and new unexpected combinations of services can function well in the network or cause considerable disturbances in it.

### DESCRIPTION OF THE INVENTION

### TECHNICAL PROBLEM

In today's telecommunication network and to a greater extent in the future telecommunication network, the network operator will not have knowledge about all services or service variants which occur in the network. To determine such a situation which services are causing interference in the own network is very difficult. Testing of all services occurring in a network cannot be carried out by manual methods. At the same time, it is necessary to ascertain what services can occur in combination with one another. It is then desirable that not only combinations in pairs are investigated. It must be established which service combinations can occur and how great the probability is that respective combinations will occur. In this connection, it is desirable that the probability is weighted with the degree of interference which can occur in the network when a respective combination occurs.

To determine the combinations which can occur, a matrix is suitably utilized. If it is assumed that in services are found in the network, mapping of the occurrence of paired services can be set up in an NxN matrix. If further service combinations are to be utilized, the dimensions of the matrix must be increased so that, if all conceivable service combinations are to be established, an n-dimensional matrix is obtained. The possibilities to test it evaluate manually the service combinations thus occurring are if not impossible than very difficult since the number of combinations becomes very large.

A further degree of complexity in this connection is obtained when subscribers communicate with one another over different networks. This circumstance occurs in international communication when subscribers from different countries communicate with one another. Moreover, the situation will in all probability occur to a greater extent within different countries in line with the fact that different network operators provide networks in the different countries. The reason is that different implementations of the same specification can provide different cases of interference.

To illuminate the problem, we consider two subscribers who communicate with one another within a network. We assume in this case that a service combination S1-S2 interacts in a lighter way, that is to say only irritation arises, for example an unnecessary delay in the connection occurs for ten seconds before a new communication can be established again. We further assume that a second case with more serious interaction between S3-S4 can occur. In the latter case, the call is interrupted in 10 % of cases and a new contact must be established.

If we consider this scenario in relation to a communication between two subscribers in different telecommunication networks, which are located in different parts of the world, the question is which is the most serious.

When disturbances occur in the same network and just as often, it is likely that the break in the call is considered to be absolutely the most serious. If it is assumed, on the other side, that the situation of a break in the call occurs in communication between subscribers in different parts of the world, this is less aggravating from the point of view of the network than the occurrence of a lighter disturbance within the own network. This is based on the fact that telecommunication between different parts of the world normally occurs less frequently than communication between subscribers in the own network. From the point of view of the network, it is thus more important to do something about the simpler fault than the more difficult fault in this connection.

There is thus a requirement that some form of weighting relating to the degree of seriousness of an interaction and an assessment of the probability that the situation will occur should be carried out.

### SOLUTION

The present invention relates to an arrangement in one or more interacting telecommunication networks. The telecommunication network comprises subscriber equipment items which communicate with one another over the telecommunication network/networks. In a respective telecommunication network, services are arranged which can be utilized by respective subscribers by being activated by the subscriber equipment items. Modification of the services or introduction of new services can be carried out by respective network operators or by the subscribers. The introduction of the services is initiated in the network via service control elements. A verifying element registers services occurring in the telecommunication network/networks. After that, the verifying element analyzes and determines which service combinations can occur. The effect of the different service combinations in the telecommunication network/networks is checked. Furthermore, restrictions for the utilization of combinations of services which cause or are geared to cause disturbances in the telecommunication network/networks are introduced. In determining which service combinations can occur, the verifying element orders the services in a matrix. The matrix is arranged in the same number of dimensions as the number of services which it is considered can occur. The verifying element also arranges the service combinations in a prioritization order with respect to the probability that the service combination will occur and the degree of disturbance which occurs in the telecommunication network/networks.

The invention also consists of a method in one or more interacting telecommunication networks which comprise subscriber equipment items which are utilized by subscribers for communication over the telecommunication networks. A number of services are arranged in a respective network. The subscribers can activate respective services in the telecommunication networks. Services can be added and/or existing services can be modified in a respective network. The services in a respective telecommunication network are registered. After that, it is determined which service combinations can be utilized. The probability of different service combinations is also determined. The effect of different service combinations in the telecommunication network/networks is determined. Restrictions relating to the utilization of service combinations which have a damaging/disturbing effect in the telecommunication networks are introduced. After identification to a service bank, the subscribers are also allowed to introduce changes in their own service profile. By this means, new services can be introduced or existing services modified. Testing of services occurring in the network is done automatically. In this connection, a matrix is utilized which specifies which services occur in the network and what combinations are possible. The dimension of the matrix corresponds to the number of service combinations which are expected to occur.

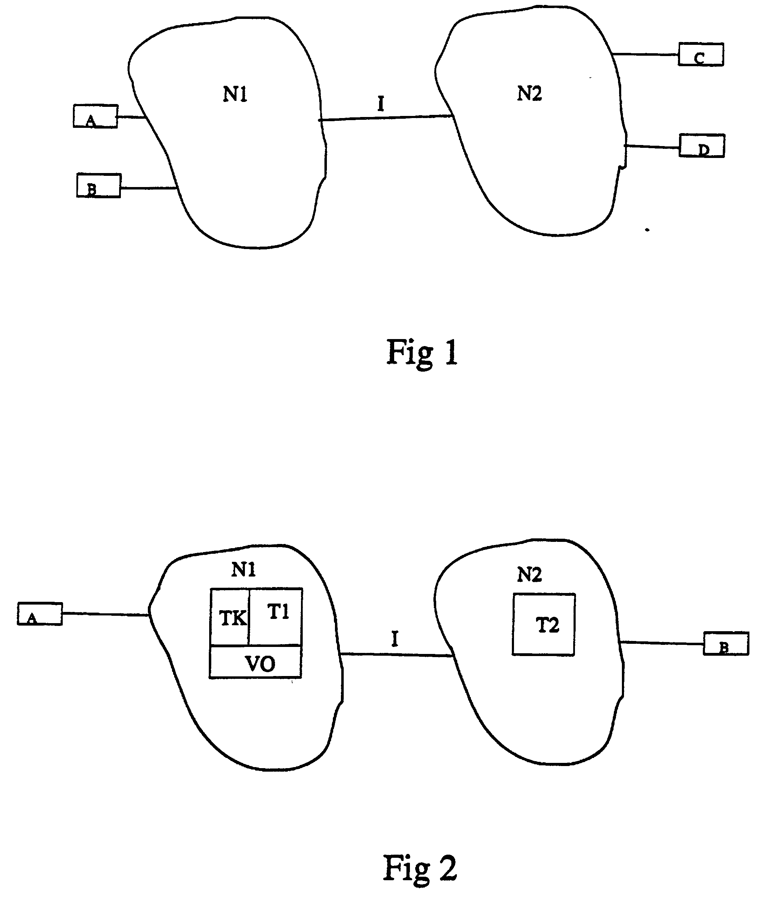

The present invention relates to a method and arrangement for testing in one or more telecommunication networks. In telecommunication networks N1 and N2 in Figure 2, service banks T1 and, respectively, T2 are arranged. The introduction of new services is carried out by the respective network operator. In network N1, however, the subscriber A is allowed to introduce new services or to modify existing services himself. The modification is carried out by subscriber A communicating with a service control element TK. On checking services in the network/networks, a verifying element VO arranges all services in a matrix. Each element in the matrix corresponds to a service combination. The probability of the different service combinations is then determined. The verifying element then takes care that test connections are established within a respective network, or, respectively, between networks. The different service combinations are then established under supervision by the network. Any disturbances which occur in the network/networks in this connection are registered and graded with respect to the interference in the network. The result obtained is then utilized for introducing restrictions relating to the utilization of certain service combinations or possibly completely prohibiting these.

### ADVANTAGES

The present invention thus allows the action of different services alone or in combination in the network to be determined. Furthermore, a possibility is provided to determine the action of different services in other telecommunication networks in a communication between the networks. Furthermore, the introduction of new services or modification of existing services is not restricted to the network operator. Mapping of which services can occur in combination in the own network or in interaction with other networks can also be established. The introduction of new services is supervised by the network and is investigated by it. The network operator is thus not compelled to supervise what services are present in the network or introduced into the network by the network operator himself or subscribers in the network. Since it has been mapped which services occur in the network/networks, the different parties in a communication can be warned against utilizing certain service combinations which can cause problems. Other service combinations can be completely forbidden by blocking or the like. The invention also allows variants of one and the same service in different places within one and the same network to be mapped. By this means, it can be established whether certain service variants cause disturbances in the network/networks in combination with other services. It can also be found out, whether the same service in different versions can produce disturbances in the network.

The invention thus establishes the probability that a certain situation will occur and what disturbances will occur as a result. Weighting this situation provides a priority order in which the different service combinations are tested. It is essential in this connection, that usual service combinations which are feared to provide disturbances in the network/networks are identified before combinations which occur less frequently or which provide fewer disturbances in the network. After this mapping, it is possible for the network/networks to prepare measures when the use of certain service combinations is desired by the subscribers. Different types of messages can be delivered by the network/networks in this case, for example a voice message, a tone message and so forth.

The invention also means that no restrictions relating to the number of services or service variants in the network/networks need to be introduced.

The invention also allows the solution specified according to the invention to be introduced in one of a number of interacting networks so that it will be possible to carry out testing of services in a respective network.

### DESCRIPTION OF THE FIGURES

Figure 1 shows two networks N1 N2. Subscribers A and respectively B are connected to N1 and subscribers C and respectively D are connected to N2. A connection I is arranged for communication between the networks.
Figure 2 shows how service banks T1 and T2 are arranged in respective networks. In the first network, a service control element and, respectively, verifying element is also shown.
Figure 3 shows a matrix with services arranged in pairs.
Figure 4 shows a multidimensional matrix where every element specifies the combination of a number of services.

### PREFERRED EMBODIMENT

In the text which follows, the concept of the invention is described with reference to the figures and the designations therein.

Figure 1 shows a network N1 to which subscribers A and B are connected. A connection I goes from N1 to a network N2. Subscribers C and D are connected to N2. The subscribers can communicate with one another within their own network or via the connection between the two networks. The communication consists of speech, data, images and so forth. The subscribers in a respective network have access to a number of services which they can utilize. The services are arranged in a service bank or the like. The service banks have been designated by T1 and T2 in networks N1 and, respectively, N2 in Figure 2. In the continued description, it is assumed changes in the service bank T1 are carried out via the service control element TK. Changes relating to the services are allowed to be carried out by the subscriber himself or by the network operator. In the second network, the situation can be the same but in the continuation it is assumed that only the network operator makes changes in the service bank T2.

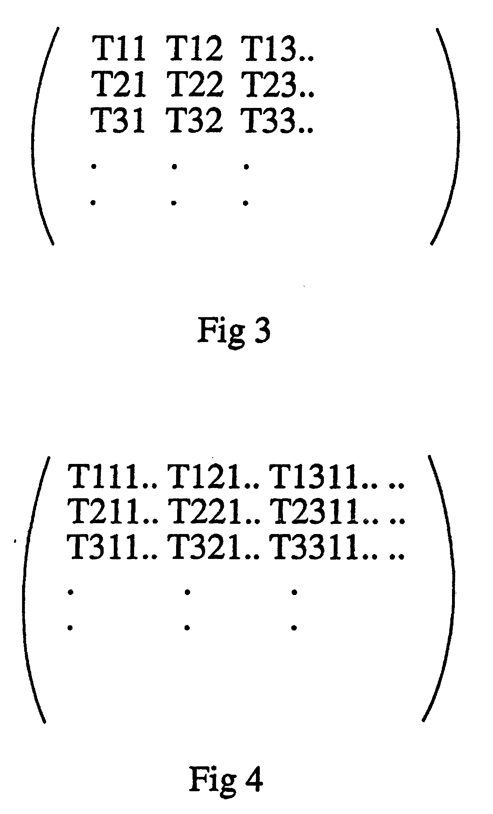

The introduction of new services in network N1 to service bank T1 is carried out via service control element TK. On introduction of the new services, the service control element TK receives instruction from the network operator or the subscriber. The service control element then has access to a number of blocks and/or functions which can be utilized and coupled together in different ways. After having been completely defined, a service which is newly produced or modified is transferred to the service bank T1. A message is also delivered to the verifying element VO that a new service or modified service has been introduced in the service bank T1. The verifying element identifies the new service or alternatively the new services and/or modified services. To begin with, we assume that a number of services has been defined and introduced in the service bank T1 in connection with the initiation of the network N1. In this connection, the verifying element arranges all services in a matrix according to Figure 3. In the matrix, each element represents an individual service or the occurrence of services in pairs. In this system, T₀₁ represents the occurrence of service 1 in network N1. In corresponding manner T₁₁ represents that service 1 is utilized by subscriber A and respectively B at the same time during communication between them.

To begin with, the verifying element goes through each element and investigates whether the service combination can be expected to occur or not. On assessing whether services can occur in combination with one another or not, attention is paid to if the services can be used optionally by respective subscribers or if they can only be initiated from a single place during an ongoing communication. On initiation of the network, an assumed probability that a certain service will be utilized is also established. These probabilities are utilized by the verifying element for establishing a probability that the service combination in question will occur. The verifying element or specially arranged statistical elements (not shown in the figures) collect information during operation about the utilization of different services. This provides information on the probability that a certain service will be utilized or not. On introduction of new services, the verifying element can utilize knowledge of previously known services and their utilization for determining the probability that a new service will be utilized. The probability is based, for example, on some service or services which are assessed to lie within the same field of application.

If the verification of several service combinations is intended, the matrix is increased to a corresponding number of dimensions according to Figure 4. Assuming the investigation provides for n combinations, the matrix will be n-dimensional in consequence. In the n-dimensional matrix, the probability number that different service combinations will occur is established in corresponding manner to the two-dimensional matrix. Then the most probable service combinations are selected. Alternatively, service combinations which are assumed to occur with a certain established probability can be checked.

The verifying element then selects the services or service combinations which are expected to occur with the highest probability. The service/service combinations are then checked by the verifying element arranging a connection between test subscribers in the network. The test subscribers then carry out the services which are intended to be tested. In this procedure, the verifying element monitors what is happening in the network and if disturbances are occurring. A number of test connections are carried out in this way which provides a probability for the disturbances and a valuation of how severe the interference/disturbances possibly are. If the disturbances are severe, rules for how the service or services are to be utilized or, alternatively, that the service/services are not to be utilized individually or in combination are introduced.

In a corresponding manner, the verifying element acquires information relating to services in other telecommunication networks. Information relating to the services T2 in the network N2 is thus transferred to the verifying element over the connection I. A matrix relating to the services in the different networks is then set up in the same manner as described above. Testing and calculation of probabilities is then carried out in the same manner as described earlier, but for both networks together. Testing of services in network N2 is carried out by the verifying element by information relating to the services T2 being transferred to the verifying element. After the probability for the occurrence of different services in the current network has been established, the setting up of test connections in network N2 is ordered and monitoring functions in the network record any disturbances and report them to the verifying element. The verifying element then analyzes the results obtained in a corresponding manner as described earlier and determines if restrictions relating to the utilization of certain services in the current network will be introduced. The verifying element also establishes which rules will be applied in communication between different networks and the utilization of services in a respective network in current communications.

In future networks it can be expected that different branches utilize different service packages. The consequence of this is that all services do not necessarily need to be checked against one another. The consequence of this can be the parties in a communication are warned against using service combinations which can cause problems in the network. In the case of severe disturbances in the network or alternatively disturbances which cannot be accepted by individual subscribers, limitations in the use of the service are introduced. In the case where a service is utilized and it is attempted to initiate further services, a message can be given that the combination is prohibited, that one service will be prioritized, that an alternative service is better, and so forth.

In addition to services being implemented in the network, services are also implemented in subscriber equipment items. The invention can also be utilized for determining disturbances in the network relating to these services in combination with services in the networks.

The invention is not limited to the embodiment shown above but can undergo modifications within the scope of the following Patent Claims and the concept of the invention.

## Claims

1. System for determining the risk of interference between two or more services in one or more telecommunication networks (N1, N2), the telecommunication networks interacting and comprising subscriber equipment items (A, B, C, D) which communicate with one another over the telecommunication network/networks, the respective telecommunication network being arranged to provide services which can be activated by means of the subscriber equipment items, and service control elements (TK) are provided to modify the services in the respective telecommunication networks and/or introduce new services in the respective telecommunication networks, **characterized in that** a verifying element (VO) is provided for registering services occurring in the respective telecommunication networks, **in that** the verifying element is adapted to analyze and determine which service combinations can occur and determine the probability of different service combinations, and **in that** the verifying element is adapted to automatically test the effect of the different service combinations in the telecommunication network/networks (N1, N2) and introduce restrictions for the utilization of combinations of services based on the probability and the grade of disturbances of the different service combinations.

2. System according to claim 1, **characterized in that** the verifying element (VO) is adapted to order the services in a matrix (T11, T12,...;T111, T112...).

3. System according to claims 1 or 2, **characterized in that** the verifying element (VO) is adapted to arrange the service combinations in a priority order with respect to the probability that the service combination will occur and the degree of interference which is obtained in the telecommunication network/networks (N1, N2).

4. System according to any of claims 1 to 3, **characterized in that** the verifying element (VO) is adapted to automatically carry out testing in the network/networks (N1, N2).

5. Method for determining the risk of interference between different services in one or more telecommunication networks (N1, N2) when the telecommunication networks interact, said networks comprising subscriber equipment items (A, B, C, D) utilized by subscribers for communication over the telecommunication networks and a respective telecommunication network including a number of services which can be activated by subscribers, and new services can be supplied to the network and/or existing services can be modified, **characterized in that** the services in the telecommunication networks (N1, N2) are registered by a verifying element (VO), **in that** it is analyzed and determined by said verifying element which different service combinations can occur, **in that** the probabilities of the service combinations are determined, and **in that** the effect of the different service combinations in the telecommunication network/networks is automatically determined and restrictions relating to the utilization of service combinations are introduced by said verifying element (VO) based on the probability and the grade of disturbances of the different service combinations.

6. Method according to claim 5, **characterized in that** the subscribers (A, B, C, D), after identification to a service bank (T1, T2), are allowed to introduce changes in their own service profile, whereby new services can be added or existing services modified.

7. Method according to claim 5 or 6, **characterized in that** said verifying element (VO) orders the services in a matrix (T11, T12,...,T111, T112,...).

8. Method according to any of claims 5 to 7, **characterized in that** the service combinations are given a priority order with respect to the expected occurrence of the service combination and the interference in the telecommunication network/networks (N1, N2) expected in this connection.

9. Method according to any of claims 5 to 8, **characterized in that** testing is done automatically.

## Patentansprüche

1. System zum Bestimmen der Gefahr von Störung zwischen zwei oder mehr Diensten in einem oder mehreren Fernmeldenetzen (N1, N2), wobei die Fernmeldenetze miteinander wechselwirken und Teilnehmerausrüstungsartikel (A, B, C, D) aufweisen, die miteinander über das Fernmeldenetz/die Fernmeldenetze kommunizieren, wobei das Fernmeldenetz so ausgebildet ist, daß es Dienste bietet, die mit Hilfe der Teilnehmerausrüstungsartikel aktiviert werden können, und wobei Dienststeuerelemente (TK) vorgesehen sind, um die Dienste in den entsprechenden Fernmeldenetzen zu verändern und/oder neue Dienste in den entsprechenden Fernmeldenetzen einzuführen, **dadurch gekennzeichnet, daß** ein Prüfelement (VO) zum Registrieren von Diensten vorgesehen ist, die in den entsprechenden Fernmeldenetzen vorkommen, daß das Prüfeleinent dazu ausgebildet ist, zu analysieren und zu bestimmen, welche Dienstkombinationen auftreten können, und die Wahrscheinlichkeit von unterschiedlichen Dienstkombinationen zu bestimmen, und daß das Prüfelement dazu ausgebildet ist, automatisch die Wirkung unterschiedlicher Dienstkombinationen im Fernmeldenetz/in den Fernmeldenetzen (N1, N2) zu prüfen und Einschränkungen für die Verwendung von Kombinationen von Diensten aufgrund der Wahrscheinlichkeit und dem Ausmaß von Störungen der unterschiedlichen Dienstkombinationen einzuführen.

2. System nach Anspruch 1, **dadurch gekennzeichnet, daß** das Prüfelement (VO) dazu ausgebildet ist, die Dienst in einer Matrix (T11, T12, ...; T111, T112, ...) anzuordnen.

3. System nach Anspruch 1 oder 2, **dadurch gekennzeichnet, daß** das Prüfelement (VO) dazu ausgebildet ist, die Dienstkombinationen in einer Prioritätsreihenfolge in Bezug auf die Wahrscheinlichkeit, daß die Dienstkombination auftreten wird, und das Ausmaß der Störungen anzuordnen, das im Fernmeldenetz/in den Fernmeldenetzen (N1, N2) erhalten wird.

4. System nach einem der Ansprüche 1 bis 3, **dadurch gekennzeichnet, daß** das Prüfelement (VO) dazu ausgebildet ist, das Prüfen automatisch im Netzwerk/in den Netzwerken (N1, N2) durchzuführen.

5. Verfahren zum Bestimmen der Gefahr von Störung zwischen unterschiedlichen Diensten in einem oder mehreren Fernmeldenetzen (N1, N2), wenn die Fernmeldenetze wechselwirken, welche Netze Teilnehmerausrüstungsartikel (A, B, C, D), die durch Teilnehmer für Kommunikation über die Fernmeldenetze verwendet werden, und ein entsprechendes Fernmeldenetz aufweisen, das eine Anzahl von Diensten einschließt, die durch Teilnehmer aktiviert werden können, und wobei neue Dienste dem Netzwerk zugefügt werden können und/oder existierende Dienste abgewandelt werden können, **dadurch gekennzeichnet, daß** die Dienste in den Fernmeldenetzen (N1, N2) durch ein Prüfelement (VO) registriert werden, daß durch das Prüfelement analysiert und bestimmt wird, welche unterschiedlichen Dienstkombinationen auftreten können, daß die Wahrscheinlichkeiten von Dienstkombinationen bestimmt werden und daß die Wirkung der unterschiedlichen Dienstkombinationen im Fernmeldenetz/in den Fernmeldenetzen automatisch bestimmt wird und Einschränkungen, die sich auf die Verwendung von Dienstkombinationen beziehen, durch das Prüfelement (VO) aufgrund der Wahrscheinlichkeit und dem Ausmaß von Störungen der unterschiedlichen Dienstkombinationen eingeführt werden.

6. Verfahren nach Anspruch 5, **dadurch gekennzeichnet, daß** es den Teilnehmern (A, B, C, D) nach Identifizierung gegenüber einer Dienstbank (T1 T2) erlaubt ist, Änderungen in ihrem eigenen Dienstprofil einzuführen, wodurch neue Dienste hinzugefügt oder existierende Dienste verändert werden können.

7. Verfahren nach Anspruch 5 oder 6, **dadurch gekennzeichnet, daß** das Prüfelement (VO) die Dienste in einer Matrix (T11, T12, ...; T111, T112, ...) anordnet.

8. Verfahren nach einem der Ansprüche 5 bis 7, **dadurch gekennzeichnet, daß** den Dienstkombinationen eine Prioritätsreihenfolge in Bezug auf das erwartete Auftreten der Dienstkombination und die Störung im Fernmeldenetz/in den Fernmeldenetzen (N1, N2), die bei dieser Verbindung erwartet wird/werden, gegeben wird.

9. Verfahren nach einem der Ansprüche 5 bis 8, **dadurch gekennzeichnet, daß** das Prüfen automatisch vorgenommen wird.

## Revendications

1. Système pour déterminer le risque d'interférence entre deux ou plusieurs services dans un ou plusieurs réseaux de télécommunication (N1, N2), les réseaux de télécommunication étant en interaction et comprenant des articles d'équipement d'abonné (A, B, C, D) qui communiquent les uns avec les autres sur le réseau / les réseaux de télécommunication, le réseau de télécommunication respectif étant agencé pour fournir des services qui peuvent être activés au moyen des articles d'équipement d'abonné, et des éléments de commande de service (TK) sont prévus pour modifier les services dans les réseaux de télécommunication respectifs et/ou introduire de nouveaux services dans les réseaux de télécommunication respectifs, **caractérisé en ce qu'**un élément de vérification (VO) est prévu pour enregistrer les services apparaissant dans les réseaux de télécommunication respectifs, **en ce que** l'élément de vérification est prévu pour analyser et déterminer les combinaisons de services qui peuvent se produire et déterminer la probabilité des différentes combinaisons de services, et **en ce que** l'élément de vérification est prévu pour tester automatiquement l'effet des différentes combinaisons de services dans le réseau / les réseaux de télécommunication (N1, N2) et introduire des restrictions pour l'utilisation de combinaisons de services sur la base de la probabilité et du degré de perturbations des différentes combinaisons de services.

2. Système selon la revendication 1, **caractérisé en ce que** l'élément de vérification (VO) est prévu pour ordonner les services dans une matrice (T11, T12, ... ; T111, T112...).

3. Système selon la revendication 1 ou 2, **caractérisé en ce que** l'élément de vérification (VO) est prévu pour ranger les combinaisons de services dans un ordre de priorité par rapport à la probabilité que la combinaison de services se produise et au degré d'interférence qui est obtenu dans le réseau / les réseaux de télécommunication (N1, N2).

4. Système selon une quelconque des revendications 1 à 3, **caractérisé en ce que** l'élément de vérification (VO) est prévu pour effectuer automatiquement des tests dans le réseau / les réseaux (N1, N2).

5. Procédé de détermination du risque d'interférence entre différents services dans un ou plusieurs réseaux de télécommunication (N1, N2) lorsque les réseaux de télécommunication sont en interaction, les dits réseaux comprenant des articles d'équipement d'abonné (A, B, C, D) utilisés par des abonnés pour communication sur les réseaux de télécommunication, et un réseau de télécommunication respectif incluant une pluralité de services qui peuvent être activés par les abonnés, et de nouveaux service peuvent être fournis au réseau et/ou des services existants peuvent être modifiés, **caractérisé en ce que** les services dans les réseaux de télécommunication (N1, N2) sont enregistrés par un élément de vérification (VO), **en ce que** le dit élément de vérification analyse et détermine les différentes combinaisons de service qui peuvent se produire, **en ce que** les probabilités des combinaisons de services sont déterminées, et **en ce que** l'effet des différentes combinaisons de services dans le réseau / les réseaux de télécommunication est automatiquement déterminé et des restrictions relatives à l'utilisation des combinaisons de services sont introduites par le dit élément de vérification (VO) sur la base de la probabilité et du degré de perturbations des différentes combinaisons de services.

6. Procédé selon la revendication 5, **caractérisé en ce que** les abonnés (A, B, C, D), après identification à une banque de services (T1, T2), sont autorisés à introduire des changements dans leur propre profil de services, de sorte que de nouveaux services peuvent être ajoutés ou bien les services existants peuvent être modifiés.

7. Procédé selon la revendication 5 ou 6, **caractérisé en ce que** le dit élément de vérification (VO) ordonne les services dans une matrice (T11, T12,... ; T111, T112,...).

8. Procédé selon une quelconque des revendications 5 à 7, **caractérisé en ce qu'**on donne un ordre de priorité aux combinaisons de services en ce qui concerne l'apparition attendue de la combinaison de services et l'interférence dans le réseau / les réseaux de télécommunication (N1, N2) attendue dans cette connexion.

9. Procédé selon une quelconque des revendications 5 à 6, **caractérisé en ce que** les tests sont effectués automatiquement.
